# EUROPÄISCHE PATENTSCHRIFT

(11) **EP 4 056 021 B1**
(45) Veröffentlichungstag und Bekanntmachung des Hinweises auf die Patenterteilung: **17.04.2024**
(21) Anmeldenummer: 21209442.9
(22) Anmeldetag: 22.11.2021
(51) Int. Cl.: A01D 41/14, A01D 67/00, A01D 43/06

(54) **SCHNEIDWERK**
CUTTING TOOL
BARRE DE COUPE

(30) Priorität: 10.03.2021 DE 102021105738
(43) Veröffentlichungstag der Anmeldung: 14.09.2022
(73) Patentinhaber: CLAAS Selbstfahrende Erntemaschinen GmbH, 33428 Harsewinkel (DE)
(72) Erfinder: Füchtling, Christian, 48317 Drenstein Rinkerode (DE); Wielenberg, Andreas, 32049 Herford (DE); Beschorn, Udo, 33428 Harsewinkel (DE); Hinz, Thomas, 33428 Harsewinkel (DE)
(74) Vertreter: CLAAS Gruppe

(56) Entgegenhaltungen:
- EP-B1- 3 545 748
- US-A1- 2010 037 582

## Beschreibung

Die vorliegende Erfindung betrifft ein Schneidwerk gemäß dem Oberbegriff von Anspruch 1.

Eine landwirtschaftliche Arbeitsmaschine umfasst üblicherweise mehrere Ernteorgane, wovon das Schneidwerk eines charakterisiert. Das Schneidwerk kann beispielsweise in Verbindung mit einem Mähdrescher eingesetzt werden, wobei es an einem vorderen Ende des Mähdreschers angeordnet ist. Mittels des Schneidwerks kann das zu erntende Erntegut abgeschnitten und sodann an die weiteren Ernteorgane der landwirtschaftlichen Arbeitsmaschine weitergegeben und von diesen verarbeitet werden. Insbesondere kann das Erntegut nach seinem Abschneiden über eine Breite des Schneidwerks hinweg in einem Mittenabschnitt zusammengeführt und von dort ausgehend weitergegeben werden, insbesondere an einen dem Schneidwerk nachgeschalteten Einzugskanal, an dem das Schneidwerk aufgehängt ist.

Das Schneidwerk umfasst einen Rahmen, der einen Mittenabschnitt sowie zwei, jeweils an gegenüberliegenden Seiten an den Mittenabschnitt angeschlossene Seitenabschnitte aufweist. Außerdem weist das Schneidwerk einen flexiblen, sich über eine Breite des Schneidwerks erstreckenden Messerbalken auf. Weiterhin umfasst das Schneidwerk eine Mehrzahl von über eine Breite des Schneidwerks verteilten Tragarmen, die verschwenkbar an dem Rahmen befestigt sind und zumindest den Messerbalken höhenverstellbar tragen. Das Schneidwerk umfasst außerdem ein Höhenführungssystem zur Höhenführung des Messerbalkens. Weiterhin weist der Mittenabschnitt ein mittiges Übergabesegment zur Übergabe von geschnittenem Erntegut an nachgeschaltete Ernteorgane sowie sich jeweils an gegenüberliegenden Seiten an das Übergabesegment anschließende Seitensegmente auf. Zudem umfasst das Höhenführungssystem eine Mehrzahl von Messbereichen mit jeweils einer Messwelle und jeweils mindestens einem der jeweiligen Messwelle zugeordneten Messsensor. Hierbei erfasst zumindest ein Teil der Messbereiche jeweils eine Mehrzahl von Tragarmen.

Beim Ernten ist es in Abhängigkeit von dem Erntegut wünschenswert, das Erntegut so tief wie möglich abzuschneiden. Mit anderen Worten ist ein Ertrag in bestimmten Fällen besonders groß, wenn das Erntegut besonders knapp über einem Untergrund abgeschnitten werden kann. Auf einem ideal planen Untergrund stellt dies kein Problem dar, doch in der Realität weist der Untergrund Unebenheiten auf. Diese Unebenheiten umfassen einerseits eine natürliche Kontur des Untergrunds, die auch als Topologie bezeichnet werden kann. Andererseits umfassen die Unebenheiten auch herumliegende Teile, beispielsweise Steine oder Äste. Weiterhin umfassen die Unebenheiten Mulden, die sich beispielsweise bei starken Regenfällen ergeben können. Da insbesondere moderne Schneidwerke mehrere Meter - manchmal 15 m und mehr - breit sind, ist es notwendig, das Schneidwerk in Abhängigkeit von den Unebenheiten höhenmäßig zu führen. Dies ist beispielsweise notwendig, um das Schneidwerk, insbesondere dessen Messerbalken, nicht durch Kollisionen mit Erhebungen des Untergrunds zu beschädigen. Außerdem ist es Ziel des Höhenführungssystems, das Schneidwerk derart an die Unebenheiten anzupassen, dass gleichwohl weiterhin möglichst viel von dem Erntegut abgeschnitten wird, das heißt grundsätzlich ein tiefes Abschneiden des Ernteguts beibehalten wird.

Unter den Schneidwerken gibt es verschiedene Bauformen, welche jeweils andere Anforderungen an das Höhenführungssystem stellen. Einerseits gibt es starre Schneidwerke, welche über ihre gesamte Breite starr ausgeführt sind. Das heißt, dass bei starren Schneidwerken jeweils nur das Schneidwerk und somit dessen Messerbalken als Ganzes angehoben und typischerweise um eine zur Fahrtrichtung der jeweiligen Arbeitsmaschine parallele Achse verschwenkt werden kann. Mit anderen Worten befindet sich bei starren Schneidwerken der Messerbalken nur als Ganzes relativ zu dem Untergrund bewegt werden.

Darüber hinaus gibt es sogenannte Flex-Wing-Draper, welche über ihre Breite in mehrere Abschnitte unterteilt sind, und zwar üblicherweise in Breitenrichtung symmetrisch. Dazu umfassen Wing-Draper beispielsweise einen Mittenabschnitt sowie zwei Seitenabschnitte. Diese sind jeweils seitlich an dem Mittenabschnitt angeordnet und genau wie der Mittenabschnitt in sich starr. Mit anderen Worten umfasst der Wing-Draper beispielsweise drei voneinander separierte Abschnitte, welche jeweils in sich starr sind. Beim Wing-Draper sind folglich die einzelnen, für sich genommen starren Abschnitte individuell verschwenkbar und somit individuell in ihrem Abstand relativ zum Untergrund einstellbar. Besonders hierbei ist, dass die jeweiligen Abschnitte, zumindest die Seitenabschnitte, nicht starr, sondern flexibel sind. Mit anderen Worten können beim Flex-Wing-Draper Teile des Schneidwerk relativ zu anderen Teilen verschwenkt werden, in aller Regel die Seitenabschnitte ("Wings") relativ zu einem Mittelabschnitt.

Das Schneidwerk ist beispielsweise mittels seines Rahmens mit einem übergeordneten Rahmen der zugehörigen landwirtschaftlichen Arbeitsmaschine, insbesondere mit einem Einzugskanal (in der Technik auch als "Schrägförderer" bezeichnet), verbunden. Das Schneidwerk weist ein hohes Eigengewicht auf, welches während der Ernte nicht einfach auf dem Untergrund abgelegt beziehungsweise über diesen geschoben werden sollte. Mit anderen Worten sollte das Eigengewicht des Schneidwerks nicht über die Tragarme in den Boden abgeleitet werden, die besonders hohe Gewichtskräfte in den Untergrund ableiten und entsprechend großen Reibungskräften ausgesetzt wären. Daher wird das Eigengewicht des Schneidwerks typischerweise von dem übergeordneten Rahmen getragen, der damit das Eigengewicht des Schneidwerks übernimmt. Um das Schneidwerk gleichwohl besonders nah über dem Untergrund zu führen, wird es trotzdem auf dem Untergrund abgelegt, wobei lediglich noch eine verbleibende, noch nicht über den übergeordneten Rahmen abgefangene "Restgewichtskraft" des Schneidwerks über die Tragarme in den Untergrund eingeleitet wird. Bei der Restgewichtskraft handelt es sich insbesondere um eine Gewichtskraft der Tragarme selbst, die unter Wirkung zumindest eines Teils ihres Eigengewichts auf dem Untergrund aufliegen. Eine Abtragung anderer Anteile des gesamten Eigengewichts des Schneidwerks über die Tragarme in den Untergrund findet typischerweise nicht statt.

Zum Zweck der Höhenführung sind die Tragarme "schwimmend" gelagert, das heißt innerhalb eines Schwenkbereichs verschwenkbar an dem Rahmen befestigt, sodass sie um eine an dem Rahmen ausgebildete, sich in Breitenrichtung des Schneidwerks erstreckende Schwenkachse hoch und runter verschwenkbar sind. Auf diese Weise sind die Tragarme dazu geeignet, einer sich ändernden Topologie des Untergrunds zu folgen. Hierzu ist es vorteilhaft, wenn die Tragarme nach Möglichkeit stets eine Gangreserve "nach oben" und "nach unten" aufweisen, sodass sie sowohl Erhebungen als auch Vertiefungen bzw. Mulden folgen und mithin die Führung des Messerbalkens nah über dem Untergrund bewerkstelligen können. Die Nachführung der Tragarme "nach unten" kann insbesondere infolge des Eigengewichts der Tragarme selbst angetrieben sein. Einen gesonderten "Nachdruck" nach unten bedarf es hierzu grundsätzlich nicht.

Um die Führung der Tragarme auf dem Untergrund zu entlasten, das heißt einen Teil des Eigengewichts der Tragarme an dem Rahmen des Schneidwerks zu übernehmen, können die Tragarme jeweils mit einer Stelleinrichtung zusammenwirken. Diese kann insbesondere als Feder konfiguriert sein, die einen Teil des Eigengewichts eines jeweiligen Tragarms aufnimmt und gegen den Rahmen des Schneidwerks abstützt. Eine Verschwenkung der Tragarme nach unten um ihre jeweilige Schwenkachse wird dann nur noch von einem verbleibenden Rest des Eigengewichts des jeweiligen Tragarms angetrieben. Hierbei ist von Vorteil, dass Reibkräfte zwischen den Tragarmen und dem Untergrund auf ein Minimum reduziert sind, ohne dass der gewünschte Bodenkontakt zwischen Tragarmen und Untergrund verloren geht.

Mittels des Höhenführungssystems wird zumindest mittelbar der Messerbalken höhenmäßig geführt. Dazu umfasst das Höhenführungssystem die Messwellen, die jeweils mit mehreren der Tragarme gekoppelt sind und zwar derart, dass eine vertikale Bewegung der Tragarme eine rotatorische Bewegung der zugehörigen Messwelle bewirkt. Zu diesem Zweck können die Tragarme insbesondere mittels einer Hebelanordnung mit der jeweils zugehörigen Messwelle verbunden sein. Maßgebend zur Vermeidung von Schäden ist in aller Regel die Anhebung des Messerbalkens, um eine Kollision des Messerbalkens mit einer Erhebung des Untergrunds zu vermeiden. Entsprechend wird die Rotation einer jeweiligen Messwelle vorzugweise von dem mit ihr zusammenwirkenden Tragarm dominiert, der am weitesten nach oben verschwenkt bzw. ausgelenkt ist.

Jeder Messwelle ist jeweils mindestens einer der Messsensoren zugeordnet, der beispielsweise ein Potentiometer sein kann. Durch die rotatorische Bewegung der Messwelle wird ein Messsignal am Messsensor erzeugt, welches im Falle des Potentiometers beispielsweise ein Spannungssignal ist. Der jeweiligen Messwelle sind jeweils mehrere der Tragarme zugeordnet. In Abhängigkeit von dem Messsignal des Messsensors wird das Höhenführungssystem betrieben, das vorzugsweise bestrebt ist, die Tragarme in einer Mittelstellung zu halten, von der ausgehend ihre Gangreserve nach oben und nach unten zumindest im Wesentlichen gleich ist. Diese Mittelstellung bildet mithin eine Soll-Stellung. Infolge der Verbindung mehrerer Tragarme zu jeweils einem Messbereich mittels einer jeweiligen Messwelle, werden die Tragarme entsprechend gewissermaßen im Verbund erfasst.

Für ein bekanntes Schneidwerk der eingangs beschriebenen Art wird beispielsweise auf das europäische Patent EP 2 732 689 B1 hingewiesen, aus der ein Schneidwerk mit einem über seine ganze Breite hinweg starren Rahmen hervorgeht, an dem wiederum Tragarme angeordnet sind, mittels welcher ein flexibler Messerbalken verbunden ist. Während das Schneidwerk über den Untergrund geführt wird und in Berührung mit Unebenheiten kommt, wird der Messerbalken gemeinsam mit den Tragarmen in vertikaler Richtung ausgelenkt. Der jeweilige Tragarm ist mittels einer Konsole an dem Rahmen angeordnet. Neben dem jeweiligen Tragarm nehmen die Konsolen zudem eine durchgehende, sich parallel zu dem Rahmen erstreckende Messwelle auf, die drehbar in den Konsolen gelagert ist. Die Messwelle erstreckt sich dabei im Wesentlichen über die gesamte Breite des jeweiligen Seitenabschnittes. Die Tragarme sind jeweils um eine Drehachse, welche sich achsparallel zu dem Rahmen und mithin in Breitenrichtung des Schneidwerks erstreckt, schwenkbar an der jeweils zugehörigen Konsole gelagert. Dies befähigt die Tragarme dazu, bei einer Unebenheit im Untergrund dem Untergrund zu folgen und auf diese Weise den Messerbalken zuverlässig oberhalb des Untergrundes, gleichwohl nah zum Untergrund, zu führen. Außerdem umfasst das Schneidwerk für jeden Tragarm eine Hebelanordnung, mittels welcher die Auslenkung des jeweiligen Tragarms auf die zugehörige Messwelle übertragbar ist. Hierbei wird die vertikale Auslenkung eines jeweiligen Tragarms in eine rotatorische Bewegung der zugehörigen Messwelle übertragen. Diese rotatorische Bewegung der Messwellen (eine Messwelle pro Seitenabschnitt) wird auf jedem Seitenabschnitt mittels zumindest eines Messsensors erfasst, der vorzugsweise als ein Drehpotentiometer ausgeführt ist. Die größte vertikale Auslenkung eines der Tragarme resultiert in der betragsmäßig größten rotatorischen Bewegung der Messwelle und dominiert damit den Betrieb des zugehörigen Höhenführungssystems, der die von den Messsensoren ausgegebenen Messsignale als Eingangsparameter dienen.

Das bekannte Schneidwerk ist insoweit nachteilig, als die Seitenabschnitte jeweils nur ein Messsignal erzeugen, wodurch die Höhenführung der Tragarme bzw. des Messerbalkens schlecht aufgelöst ist, was insbesondere bei besonders breiten Schneidwerken dazu führen kann, dass dem Wunsch der möglichst durchgehend nahen Führung des Messerbalkens über dem Untergrund nicht immer entsprochen werden kann.

Weiterhin wird beispielhaft auf das europäische Patent EP 2 288 250 B1 hingewiesen, der eine gattungsgemäße Ausgestaltung zu entnehmen ist. Dessen Schneidwerk ist mittels eines Höhenführungssystems relativ zum Untergrund höhenverstellbar. Das Schneidwerk ist hierbei in mehrere Abschnitte unterteilt, die von Tragarmen gestützt werden. Das Höhenführungssystem umfasst eine Mehrzahl von Messsensoren, die jeweils einem der Abschnitte zugeordnet sind. Jeder der Messsensoren ist an einem der Tragarme angeordnet, wobei lediglich ein Teil der Tragarme mit einem Messsensor ausgestattet ist. Mit anderen Worten umfasst jeder Abschnitt mehrere Tragarme und somit Messsensoren, sodass für jeden Abschnitt mehrere Positionssignale der Tragarme mittels der Messsensoren erfasst werden und zur Verfügung stehen. Hierbei ist vorgesehen, dass jeder der Messsensoren ein Potentiometer aufweist, mittels dessen ein jeweiliges Spannungssignal erfasst und bereitgestellt werden kann. Innerhalb eines jeweiligen Abschnittes werden die jeweiligen Spannungssignale miteinander verglichen und dasjenige mit dem kleinsten Wert identifiziert. Je kleiner das Spannungssignal, desto größer ist ein Abstand des Schneidwerks in Relation zu dem Untergrund. Mit anderen Worten wird jeder Bereich durch das betragsmäßig kleinste Spannungssignal repräsentiert. In der Folge wird das Schneidwerk in Abhängigkeit von dem jeweiligen kleinsten Spannungssignal eingestellt.

Das beschriebene Schneidwerk ist insbesondere dahingehend nachteilig, als nicht alle Tragarme von Messsensoren erfasst sind, sodass ein Teil der Tragarme "blind" geführt werden. Lokale Erhebungen oder Vertiefungen des Untergrundes, die nicht mit Messsensoren ausgestattete Tragarme betreffen, können daher nicht berücksichtigt werden.

Aufgabe der vorliegenden Erfindung ist es, ein Schneidwerk der eingangs benannten Art derart weiterzuentwickeln, dass dessen Nachteile überwunden werden.

Diese Aufgabe wird erfindungsgemäß durch die kennzeichnenden Merkmale des Anspruches 1 gelöst. Vorteilhafte Ausgestaltungen sind Gegenstand der Unteransprüche.

Das erfindungsgemäße Schneidwerk ist dadurch gekennzeichnet, dass die Seitenabschnitte jeweils mindestens zwei Messbereiche sowie die Seitensegmente des Mittenabschnitts jeweils mindestens einen Messbereich aufweisen.

Das erfindungsgemäße Schneidwerk hat viele Vorteile und unterscheidet sich von dem Stand der Technik grundlegend. Gegenüber dem Stand der Technik umfassen die Seitenabschnitte nicht nur jeweils einen, sondern mindestens zwei Messbereiche. Dies hat zur Folge, dass die Messbereiche als solche gegenüber dem Stand der Technik jeweils weniger Tragarme umfassen. Mit anderen Worten werden über die gesamte Breite des Schneidwerks mehr Messbereiche gebildet, wobei durch jeden der Messbereiche über eine jeweilige Messwelle zumindest ein Messsignal bereitgestellt wird. Das bedeutet, dass gegenüber dem Stand der Technik weniger Tragarme unter einem Messsignal zusammengefasst werden. Dies ist insbesondere im Hinblick auf ein besonders breites Flex-Wing-Draper Schneidwerk vorteilhaft, da anstelle einer einzigen Höheninformation pro Seitenabschnitt nunmehr mindestens zwei Höheninformationen pro Seitenabschnitt bereitgestellt werden. Dies ist insbesondere bei einem Schneidwerk sinnvoll dessen Seitenabschnitte relativ zu dem Mittenabschnitt verschwenkbar sind. Bei einer solchen vorteilhaften Ausgestaltung können die "Wings", das heißt die Seitenabschnitte, separat angesteuert werden, insbesondere betreffend eine Schwenkstellung relativ zu dem Mittenabschnitt, an dem die Seitenabschnitte angeordnet sind. Bei dem erfindungsgemäßen Schneidwerk wird zudem vorteilhafterweise kein Tragarm unberücksichtigt gelassen, wenn vorzugsweise in Summe alle Tragarme jeweils einem der Messbereiche zugeordnet sind. "Blinde" Tragarme, wie sie im Stand der Technik vorliegen, sind auf diese Weise vermieden.

In vorteilhafter Ausgestaltung ist vorgesehen, dass die Seitenabschnitte jeweils genau zwei Messbereiche und die Seitensegmente des Mittenbereichs jeweils genau einen Messbereich aufweisen. In der Praxis hat sich gezeigt, dass durch die derartige Ausgestaltung ein besonders guter Kompromiss zwischen Komplexität des Schneidwerks und Effizienz beim Ernten erzielt werden kann. Hieraus ergibt sich der Vorteil, dass das Schneidwerk besonders kosteneffizient hergestellt werden kann, gleichzeitig jedoch genügend Messinformationen erfasst werden, die eine Steuerung des Schneidwerks in der Art ermöglichen, dass die Tragarme trotz unregelmäßiger Topologie des Untergrunds möglichst jeweils in ihrer Mittelstellung bzw. Soll-Stellung gehalten werden, in der sie eine zumindest im Wesentlichen gleiche Gangreserve sowohl nach oben als auch nach unten aufweisen.

Das erfindungsgemäße Schneidwerk weiter ausgestaltend ist vorgesehen, dass das Schneidwerk einen weiteren Messbereich aufweist, der das Übergabesegment erfasst, wobei das Übergabesegment höhenverstellbar und vorzugsweise in sich starr ist. Dies hat den Vorteil, dass auch das Übergabesegment höhenmäßig überwacht wird, sodass der Teil des Messerbalkens, der dem Übergabesegment zugeordnet ist, ebenfalls vor einer ungewollten Kollision mit dem Untergrund geschützt ist. Vorteilhafterweise ergibt sich hierdurch ein besonders verschleißarmer Betrieb, da auf der gesamten Breite des Schneidwerks Kollisionen mit dem Untergrund vermieden werden können.

In einer besonders vorteilhaften Ausgestaltung ist vorgesehen, dass alle Messbereiche jeweils eine Mehrzahl von Tragarmen erfassen. Durch Zusammenfassen mehrerer Tragarme zu einem Messbereich lässt sich die Komplexität deutlich reduzieren. Hierdurch ergibt sich der Vorteil, dass das Schneidwerk besonders einfach betrieben werden kann. Gleichzeitig ist vermieden, dass einzelne Tragarme des Schneidwerks gar nicht überwacht werden.

Vorteilhafterweise erfassen die Messwellen der den Seitenabschnitten zugeordneten Messbereiche jeweils mindestens drei Tragarme. In Versuchen hat sich gezeigt, dass durch Zusammenfassen von drei Tragarmen zu einem Messbereich nahezu auf alle Unebenheiten hinreichend reagiert werden kann.

Die Erfindung besonders vorteilhaft ausgestaltend ist vorgesehen, dass insgesamt alle Tragarme von den Messbereichen erfasst sind. Mit anderen Worten gibt es keinen Tragarm, der nicht einem Messbereich zugeordnet ist. Es ist daher ausgeschlossen, dass ein Tragarm als "unbeobachteter Ausreißer" zwischen den anderen Tragarmen hervorsticht. Dies kann insbesondere bei stark lokal abgegrenzten Unebenheiten zu Problemen führen, da der betroffene Tragarm nicht durch Wirkung des Höhenführungssystems nachgeführt werden kann, seinen oberen Anschlag erreicht, über den hinweg keine weitere Anhebung möglich ist, und der von dem Tragarm getragene Messerbalken schließlich mit der Erhebung kollidiert. Dies wird durch die vorteilhafte erfindungsgemäße Ausgestaltung vermieden, da jeder Tragarm erfasst wird und das Höhenführungssystem Maßnahmen ergreifen kann, die dazu führen, dass das Schneidwerk entsprechend bewegt und dadurch der jeweils betroffene Tragarm - zusammen mit anderen Tragarmen - angehoben wird, wodurch er sich in Richtung seiner Soll-Stellung bewegt und dadurch eine Gangreserve nach oben verbleibt. Entsprechend lässt sich mit der vorteilhaften Ausgestaltung des Schneidwerks ein besonders sicherer und störungsarmer Betrieb realisieren.

Es ist in vorteilhafter Ausgestaltung vorgesehen, dass die Messwellen langgestreckt ausgebildet sowie um ihre Längsachse drehbar an dem Rahmen gelagert sind, wobei vorzugsweise sich die Messwellen parallel zur Breitenrichtung des Schneidwerks erstrecken. Da die Messwellen zumindest mittelbar mit den Tragarmen verbunden sind, sind die Messwellen Kräften ausgesetzt, die durch Bewegen der Tragarme hervorgerufen werden. Insbesondere können die Tragarme mittels Hebelanordnungen jeweils mit der ihnen zugehörigen Messwelle gekoppelt sein, wobei vorzugsweise eine Verdrehung einer jeweiligen Messwelle von dem Tragarm des jeweiligen Messbereichs dominiert wird, dessen Auslenkung nach oben am stärksten ausgeprägt ist, bzw. dessen Gangreserve nach oben am geringsten ist.

In einer besonders vorteilhaften Ausgestaltung ist vorgesehen, dass jeder in einem Messbereich erfasste Tragarm mittels einer Hebelanordnung mit der dem Messbereich zugehörigen Messwelle verbunden ist, wobei die Hebelanordnung dazu eingerichtet ist, eine Schwenkbewegung des zugeordneten Tragarms relativ zu dem Rahmen in eine Drehbewegung der Messwelle um deren Längsachse zu übersetzen. Diese Drehbewegung lässt sich besonders einfach auslesen, was vorteilhafterweise dazu führt, dass das Schneidwerk besonders unkompliziert betrieben werden kann.

Vorteilhafterweise ist weiterhin vorgesehen, dass die Seitenabschnitte jeweils relativ zu dem Mittenabschnitt verschwenkbar ausgebildet sind, vorzugsweise jeweils um eine horizontal sowie senkrecht zu einer Breitenrichtung des Schneidwerks orientierte Schwenkachse. Dies ist charakteristisch für ein sog. Wing-Draper- oder Flex-Wing-Draper-Schneidwerk. Diese Ausgestaltung hat zur Folge, dass über die gesamte Breite des Schneidwerks große Höhenunterschiede des Untergrunds ausgleichbar sind. Während beispielsweise der eine Seitenabschnitte auf eine lokal begrenzte Erhebung reagieren muss und somit nach oben verschwenkt wird, kann der andere Seitenabschnitt nach unten verschwenkt werden, um auf eine Mulde zu reagieren. Dies hat zum Vorteil, dass das Schneidwerk besonders bedarfsgerecht einsetzbar ist, wobei das gewünschte Ergebnis der besonders nahen Führung des Messerbalkens über dem Boden besser erreicht werden kann.

Ein weiterer Vorteil ergibt sich dadurch, dass das Übergabesegment des Mittenabschnitts in sich starr ausgebildet ist. Da die Seitenabschnitte beweglich an dem Mittenabschnitt gelagert sind, wird dieser durch Bewegungen der Seitenabschnitte belastet. Diese Belastungen können besonders gut aufgenommen werden, wenn der Mittenabschnitt in sich starr ausgebildet ist. Während des Betriebs werden die Seitenabschnitte ständig auf und ab geschwenkt, das heißt der Mittenabschnitt wird ständig belastet. Es ergibt sich demzufolge der Vorteil, dass das Schneidwerk besonders langlebig ist.

Das Schneidwerk besonders vorteilhaft ausgestaltend ist vorgesehen, dass die Seitensegmente des Mittenabschnitts flexibel ausgebildet sind, wobei vorzugsweise die Seitensegmente jeweils mindestens zwei Tragarme umfassen. Diese Ausgestaltung hat den Vorteil, dass sich das Schneidwerk auch in seinem Mittenabschnitt dem Untergrund anpassen bzw. dessen Topologie folgen kann, wodurch die Führung des Messerbalkens nah über dem Untergrund verbessert ist.

Es in vorteilhafter Ausgestaltung eine Steuerung vorgesehen, die mit den Messsensoren der Messbereiche in Daten übertragender Weise verbunden ist, sodass mittels der Steuerung Messsignale, die mittels der Messsensoren erzeugt werden, verarbeitbar sind. Besonders vorteilhaft ist weiterhin eine Ausgestaltung, bei der die Steuerung dazu eingerichtet ist, in Abhängigkeit der verarbeiteten Messsignale Steuerbefehle zu erzeugen, die darauf hinwirken, eine Ist-Stellung der Tragarme an dem Rahmen in Richtung einer Soll-Stellung zu verändern. Es ergibt sich hierdurch der Vorteil, dass ein besonders präziser und zuverlässiger Betrieb des Schneidwerks realisiert werden kann. Die Soll-Stellung ist vorzugsweise definiert als eine vorstehend bereits beschriebene Mittelstellung, in der die Tragarme sowohl nach oben als auch nach unten eine zumindest im Wesentlichen vom Betrag her gleiche Gangreserve aufweisen. Die Veränderung der Ist-Stellung der Tragarme wird vorzugsweise mittels verschiedener Bewegungen des Schneidwerks bzw. dessen Rahmen bewirkt. Insbesondere ist es denkbar, dass
- das Schneidwerk insgesamt angehoben oder abgesenkt wird (vertikale Translation); insbesondere wird dies erreicht mittels eines hydraulischen Antriebs eines übergeordneten Rahmenteils der zugehörigen Arbeitsmaschine, insbesondere mittels Anhebens und Absenkens eines Einzugskanals, an dem das Schneidwerk gelagert ist;
- das Schneidwerk insgesamt um eine Schwenkachse verschwenkt wird, die sich in Tiefenrichtung des Schneidwerks bzw. in Fahrtrichtung der das Schneidwerk tragenden Arbeitsmaschine erstreckt (Rotation); insbesondere wird dies erreicht mittels eines hydraulischen Antriebs eines übergeordneten Rahmenteils der zugehörigen Arbeitsmaschine, insbesondere mittels Drehens eines Einzugskanals, an dem das Schneidwerk gelagert ist;
- die Seitenabschnitte ("Wings") des Schneidwerks unabhängig voneinander relativ zu dem Mittensegment verschwenkt werden, insbesondere um eine sich in Tiefenrichtung des Schneidwerks erstreckende Schwenkachse (Rotation).

Vorteilhafterweise sind Fördervorrichtungen vorgesehen, die jeweils als mindestens ein endloses Band ausgeführt und derart drehantreibbar sind, dass mittels der Fördervorrichtungen das abgeschnittene Erntegut in Breitenrichtung des Schneidwerks dem Übergabesegment des Mittenabschnitts zuführbar ist. Aufgrund seiner Flexibilität kann das Band selbst dann betrieben werden, wenn es über seine Länge in Laufrichtung Höhen und Tiefen gibt. Mit anderen Worten kann das Band, im Gegensatz beispielsweise zu einer starren Förderschnecke, einen gewissen Versatz ausgleichen. Dies ist für die flexible Gestalt des Schneidwerks, die das Schneidwerk in der beschriebenen Weise zur Anpassung an die sich fortwährend ändernde Topologie des Untergrunds befähigt, vorteilhaft.

In weiterer vorteilhafter Ausgestaltung ist vorgesehen, dass dem Übergabesegment eine Fördervorrichtung zugeordnet ist, wobei die Fördervorrichtung, die vorzugsweise in Form eines endlosen und drehantreibbaren Bandes ausgeführt ist, dazu eingerichtet ist, das abgeschnittene Erntegut in Tiefenrichtung des Schneidwerks zu fördern. Üblicherweise sind in Tiefenrichtung des Schneidwerks die weiteren Ernteorgane angeordnet. Mit anderen Worten kann das Erntegut in Tiefenrichtung also direkt an die weiteren Ernteorgane, insbesondere an einen nachgeschalteten Einzugskanal, weitergegeben werden. Hieraus ergibt sich der Vorteil, dass das Schneidwerk einen besonders reibungslosen Betrieb gewährleistet.

Es ist in vorteilhafter Ausgestaltung vorgesehen, dass das Höhenführungssystem zur Höhenführung zumindest eines Teils der Fördervorrichtungen, vorzugsweise sämtlicher Fördervorrichtungen, eingerichtet ist. Hierdurch wird ein besonders zuverlässiger Fluss des Ernteguts realisiert, da die Fördereinrichtungen höhenmäßig aufeinander abgestimmt werden können. Hieraus ergibt sich der Vorteil, dass kein Erntegut vom der Fördereinrichtung abfällt und somit ein besonders ertragreicher Betrieb realisierbar ist.

Die Erfindung ist nachstehend anhand eines Ausführungsbeispiels, das in den Figuren dargestellt ist, näher erläutert. Es zeigt:
- Fig. 1:: schematische Gesamtansicht eines erfindungsgemäßen Schneidwerks;
- Fig. 2:: schematische Perspektivansicht des erfindungsgemäßen Schneidwerks; und
- Fig. 3:: schematische Detailansicht des erfindungsgemäßen Schneidwerks.

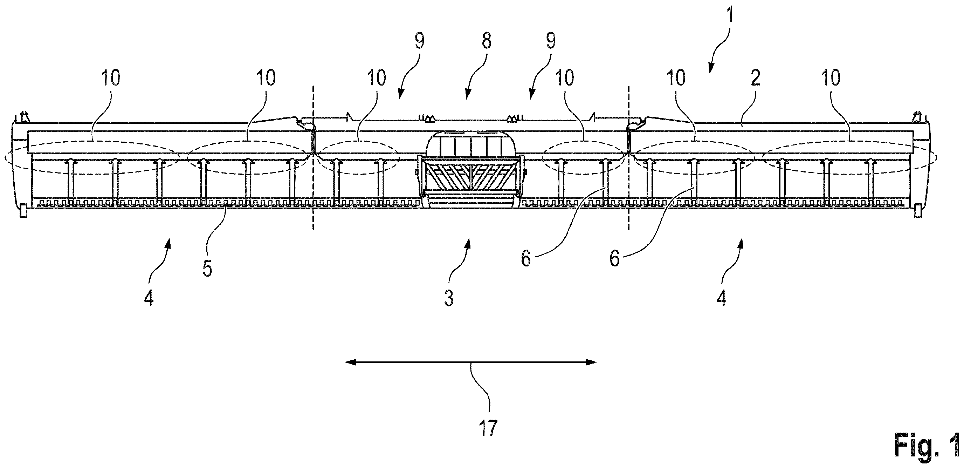

Ein Ausführungsbeispiel der Erfindung ist in den **Figuren 1 bis 3** dargestellt. **Figur 1** zeigt in einer schematischen Gesamtansicht ein erfindungsgemäßes Schneidwerk **1.** Das Schneidwerk **1** umfasst einen Rahmen **2,** der einen Mittenabschnitt **3** sowie zwei, jeweils an gegenüberliegenden Seiten an den Mittenabschnitt **3** angeschlossene Seitenabschnitte **4** aufweist. Außerdem umfasst das Schneidwerk **1** einen flexiblen, sich über eine Breite des Schneidwerks **1** erstreckenden Messerbalken **5** sowie eine Mehrzahl von Tragarmen **6,** die verschwenkbar an dem Rahmen **2** befestigt sind und zumindest den Messerbalken **5** höhenverstellbar tragen. Weiterhin umfasst das Schneidwerk **1** ein Höhenführungssystem **7** zur Höhenführung zumindest des Messerbalkens **5.**

Der Mittenabschnitt **3** weist ein mittiges Übergabesegment **8** zur Übergabe von geschnittenem Erntegut an nachgeschaltete Ernteorgane sowie sich jeweils an gegenüberliegenden Seiten an das Übergabesegment **8** anschließende Seitensegmente **9** auf. Die nachgeschalteten Ernteorgane sind der Übersichtlichkeit halber nicht dargestellt.

Das Höhenführungssystem **7** umfasst eine Mehrzahl von Messbereichen **10** mit jeweils einer Messwelle **11** und jeweils mindestens einen der jeweiligen Messwelle **11** zugeordneten Messsensor **12.** Jeder der Messbereiche **10** erfasst jeweils eine Mehrzahl von Tragarmen **6,** wie sich besonders gut anhand von **Figur 1** ergibt. Die Tragarme **6** sind schwenkbar an dem Rahmen **2** gelagert und tragen gemeinsam den Messerbalken **5.**

Während eines Erntevorgangs kann es in Abhängigkeit von dem Erntegut vorteilhaft sein, das Schneidwerk **1,** insbesondere dessen Messerbalken **5,** so nah wie möglich über einem Untergrund zu führen, um das Erntegut möglichst knapp abzuschneiden. Mit anderen Worten wird das Erntegut möglichst nah über dem Untergrund abgeschnitten, um Schnittverluste zu minimieren. Zu diesem Zweck wird das Schneidwerk **1** im Betrieb der zugehörigen Arbeitsmaschine auf dem Untergrund abgelegt und "gleitend" über den Untergrund geführt. Die Ablage erfolgt in der Art, dass die Tragarme **6** auf dem Untergrund aufliegen und im Zuge des Vortriebs der Arbeitsmaschine über den Untergrund geschoben werden. Gleichwohl sind die Tragarme **6** nicht zum Abtrag des Eigengewichts des Schneidwerks **1** verantwortlich, was zu große Reibung und einen zu starken Verschleiß zur Folge hätte. Stattdessen wird das Schneidwerk **1** von dem übergeordneten Rahmen der Arbeitsmaschine getragen, an den das Schneidwerk **1** angeschlossen ist. Dies ist in den Figuren nicht dargestellt. Die Führung der Tragarme **6** in Kontakt mit dem Untergrund ist hier allein durch das Eigengewicht der Tragarme **6** bedingt, das die Tragarme **6** nach unten zieht.

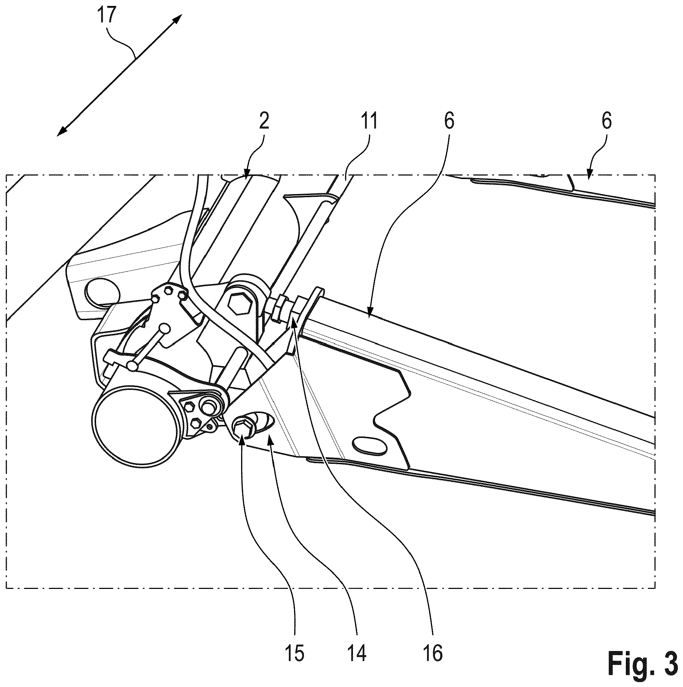

Die Tragarme **6** sind verschwenkbar an dem Rahmen **2** gelagert, sodass sie um eine Mittelstellung hoch und runter verschwenkbar sind. Die Schwenkachsen erstrecken sich mithin parallel zu einer Breitenrichtung **17** des Schneidwerks **1.** Die Tragarme **6** sind dabei jeweils in einem Schwenkbereich verschwenkbar, der sich sowohl nach oben als auch nach unten um die Mittelstellung erstreckt. Der Schwenkbereich ist durch Anschläge beschränkt, sodass die Tragarme **6** jeweils ausgehend von ihrer Mittelstellung eine Gangreserve nach oben und nach unten aufweisen, die typischerweise für beide Richtungen gleich groß ist. **Figur 3** zeigt hierzu, dass die Tragarme **6** vorliegend jeweils eine Ausnehmung **14** aufweisen, in welcher ein Bolzen **15,** der an dem Rahmen **2** angeordnet ist, eingreifen kann. Die Ausnehmung **14** ist derart dimensioniert, dass der Bolzen **15** einen gewissen Bewegungsspielraum hat, der den Schwenkbereich beschreibt. Dies hat zur Folge, dass der Bolzen **15** gemäß seinem Spielraum Bewegungen des Tragarms **6** um eine zur Breitenrichtung **17** des Schneidwerks **1** parallele Schwenkachse zulässt.

Um die Tragarme **6** in Gegenwart ihres Eigengewichts zu entlasten, wirken die Tragarme **6** jeweils mit einer als Hydraulikzylinder ausgeführten Stelleinrichtung **16** zusammen. Die Stelleinrichtungen **16** wirken hier gewissermaßen als Feder, die einen Teil des Eigengewichts eines jeweiligen Tragarms **6** aufnimmt, sodass der Tragarm **6** bei seiner gleitenden Führung über den Untergrund nicht mit seinem vollständigen Eigengewicht auf dem Untergrund aufliegt. In dieser Konfiguration ist das Schneidwerk **1** entsprechend über die Tragarme **6** in direktem Kontakt zum Untergrund geführt. Hierbei ist das Schneidwerk **1** insgesamt nach Möglichkeit derart an dem übergeordneten Rahmen der Arbeitsmaschine, insbesondere einem Einzugskanal eines Mähdreschers, gelagert, dass die Tragarme **6** in ihrer Mittelstellung vorliegen. Hierdurch sind sie besonders gut dazu in der Lage, auf topologische Veränderungen sowohl nach oben (Erhebungen) als auch nach unten (Vertiefungen) zu reagieren und diesen zu folgen. Aufgrund der flexiblen Ausgestaltung des Messerbalkens **5** kann dieser den individuellen Verschwenkungen der Tragarme **6** lokal folgen und mithin in gewünschter Weise durchgehend möglichst nach zum Untergrund geführt werden, ohne einem Kollisionsrisiko mit dem Untergrund ausgesetzt zu sein.

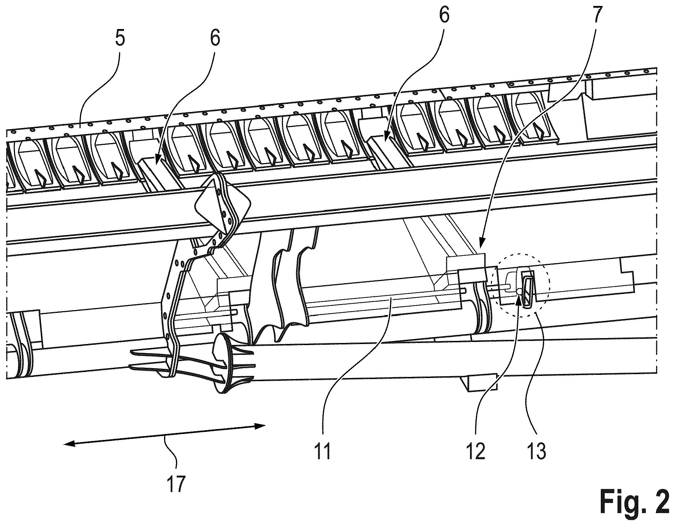

Das Höhenführungssystem **7** dient nunmehr dazu, das Schneidwerk **1** so zu steuern, dass die Tragarme **6** nach Möglichkeit fortwährend in ihrer Soll-Stellung, das heißt insbesondere die Mittelstellung, vorliegen. Unebenheiten des Untergrunds führen notwendigerweise zu einer Auslenkung einzelner oder mehrerer Tragarme **6,** sodass fortwährend eine Justierung vorgenommen wird. Um die Auslenkungen der Tragarme **6** zu erfassen, kommt das Höhenführungssystem **7** zum Einsatz, das - wie beschrieben - die Messwellen **11** und zugeordnete Messsensoren **12** umfasst. Dazu ist vorliegend an den Messwellen **11** jeweils zumindest ein Messsensor **12** angeordnet. **Figur 2** zeigt, dass die Tragarme **6** gelenkig mit der Messwelle **11** verbunden sind, und zwar derart, dass eine Bewegung der Tragarme **6,** welche im Wesentlichen in vertikale Richtung erfolgt, eine rotatorische Bewegung der Messwelle **11** verursacht. Dies kann insbesondere mittels einer Hebelanordnung erfolgen. Der Messsensor **12** ist vorliegend ein Potentiometer **13,** mittels dessen durch die rotatorische Bewegung der Messwelle **11** ein Messsignal in Form eines Spannungssignals erzeugt wird. Mit anderen Worten werden mehrere Tragarme **6** zusammenfassend von einer der Messwellen **11** erfasst, sodass für mehrere Tragarme **6** ein und dasselbe, mittels des an der entsprechenden Messwelle **11** angeordneten Messsensors **12** erfasste, Messsignal vorliegt. Hierbei ist vorgesehen, dass der Tragarm **6** eines jeweiligen Messbereichs **10,** der die größte Auslenkung nach oben erfährt, maßgebend ist für die Rotation der jeweiligen Messwelle **11** und mithin für das Messsignal, das von dem Messsensor **12** erzeugt wird. Dieses Messsignal bildet sodann einen Eingangsparameter für die weitere Steuerung des Schneidwerks **1,** die in der beschriebenen Weise eine Veränderung einer Ist-Stellung der Tragarme **6** in Richtung der Soll-Stellung zum Ziel hat.

Die Einflussnahme auf die Positionen der Tragarme **6** erfolgt in dem gezeigten Beispiel mittels verschiedener Maßnahmen, die jeweils anteilig oder exklusiv verwendet werden können. Insbesondere kann das Schneidwerk **1** als Ganzes angehoben und/oder als Ganzes um eine Schwenkachse, die sich in Tiefenrichtung des Schneidwerks **1** bzw. in Fahrtrichtung der zugehörigen Arbeitsmaschine erstreckt, und/oder mittels Verschwenkens eines oder beider Seitenabschnitte **4** relativ zu dem Mittenabschnitt ebenfalls um eine sich in Tiefenrichtung des Schneidwerks **1** erstreckende Schwenkachse, verschwenkt werden. Die erfindungsgemäße Unterteilung der Seitenabschnitte in jeweils zwei Messbereiche **10** verhilft dazu, die Seitenabschnitte **4** gezielt relativ zu dem Mittenabschnitt **3** zu verschwenken und auf diese Weise einen zusätzlichen Einfluss auf die Ist-Stellungen der zugehörigen Tragarme **6** zu nehmen.

### Bezugszeichenliste

- 1: Schneidwerk
- 2: Rahmen
- 3: Mittenabschnitt
- 4: Seitenabschnitte
- 5: Messerbalken
- 6: Tragarm
- 7: Höhenführungssystem
- 8: Übergabesegment
- 9: Seitensegmente
- 10: Messbereich
- 11: Messwelle
- 12: Messsensor
- 13: Potentiometer
- 14: Ausnehmung
- 15: Bolzen
- 16: Stelleinrichtung
- 17: Breitenrichtung

## Patentansprüche

1. Schneidwerk (1), umfassend
- einen Rahmen (2), der einen Mittenabschnitt (3) sowie zwei, jeweils an gegenüberliegenden Seiten an den Mittenabschnitt (3) angeschlossene Seitenabschnitte (4) aufweist,
- einen flexiblen, sich über eine Breite des Schneidwerks (1) erstreckenden Messerbalken (5),
- eine Mehrzahl von über eine Breite des Schneidwerks (1) verteilten Tragarmen (6), die verschwenkbar an dem Rahmen (2) befestigt sind und zumindest den Messerbalken (5) höhenverstellbar tragen,
- ein Höhenführungssystem (7) zur Höhenführung zumindest des Messerbalkens (5),
wobei der Mittenabschnitt (3) ein mittiges Übergabesegment (8) zur Übergabe von geschnittenem Erntegut an nachgeschaltete Ernteorgane sowie sich jeweils an gegenüberliegenden Seiten an das Übergabesegment (8) anschließende Seitensegmente (9) aufweist,
wobei das Höhenführungssystem (7) eine Mehrzahl von Messbereichen (10) mit jeweils einer Messwelle (11) und jeweils mindestens einem der jeweiligen Messwelle (11) zugeordneten Messsensor (12) umfasst,
wobei zumindest ein Teil der Messbereiche (10) jeweils eine Mehrzahl von Tragarmen (6) erfasst,
**dadurch gekennzeichnet, dass**
die Seitenabschnitte (4) jeweils mindestens zwei Messbereiche (10) sowie die Seitensegmente (9) des Mittenbereichs (3) jeweils mindestens einen Messbereich (10) aufweisen.

2. Schneidwerk (1) nach Anspruch 1, **dadurch gekennzeichnet, dass** die Seitenabschnitte (4) jeweils genau zwei Messbereiche (10) und die Seitensegmente (9) des Mittenbereichs jeweils genau einen Messbereich (10) aufweisen.

3. Schneidwerk (1) nach einem der vorhergehenden Ansprüche, **gekennzeichnet durch** einen weiteren Messbereich (10), der das Übergabesegment (8) erfasst, wobei das Übergabesegment (8) höhenverstellbar und vorzugsweise starr ist.

4. Schneidwerk (1) nach einem der vorhergehenden Ansprüche, **dadurch gekennzeichnet, dass** alle Messbereiche (10) jeweils eine Mehrzahl von Tragarmen (6) erfassen.

5. Schneidwerk (1) nach einem der vorhergehenden Ansprüche **dadurch gekennzeichnet, dass** die Messwelle (11) der den Seitenabschnitten (4) zugeordneten Messbereiche (10) jeweils mindestens drei Tragarme (6) erfassen.

6. Schneidwerk (1) nach einem der vorhergehenden Ansprüche, **dadurch gekennzeichnet, dass** insgesamt alle Tragarme (6) von den Messbereichen (10) erfasst sind.

7. Schneidwerk (1) nach einem der vorhergehenden Ansprüche, **dadurch gekennzeichnet, dass** die Messwellen (11) langgestreckt ausgebildet sowie um ihre Längsachse drehbar an dem Rahmen (2) gelagert sind, wobei vorzugsweise sich die Messwellen (11) parallel zur Breitenrichtung des Schneidwerks (1) erstrecken.

8. Schneidwerk (1) nach Anspruch 7, **dadurch gekennzeichnet, dass** jeder in einem Messbereich (10) erfasste Tragarm (6) mittels einer Hebelanordnung mit der dem Messbereich (10) zugehörigen Messwelle (11) verbunden ist, wobei die Hebelanordnung dazu eingerichtet ist, eine Höhenbewegung des zugeordneten Tragarms (6) in eine Drehbewegung der Messwelle (11) zu übersetzen.

9. Schneidwerk (1) nach einem der vorhergehenden Ansprüche, **dadurch gekennzeichnet, dass** die Seitenabschnitte (4) jeweils relativ zu dem Mittenabschnitt (3) verschwenkbar ausgebildet sind, vorzugsweise jeweils um eine horizontal sowie senkrecht zu einer Breitenrichtung des Schneidwerks (1) orientierte Schwenkachse.

10. Schneidwerk (1) nach einem der vorhergehenden Ansprüche, **dadurch gekennzeichnet, dass** das Übergabesegment (8) des Mittenabschnitts (3) in sich starr ausgebildet ist.

11. Schneidwerk (1) nach einem der vorhergehenden Ansprüche, **dadurch gekennzeichnet, dass** die Seitensegmente (9) des Mittenabschnitts (3) flexibel ausgebildet sind, wobei vorzugsweise die Seitensegmente (9) jeweils mindestens zwei Tragarme (6) umfassen.

12. Schneidwerk (1) nach einem der vorhergehenden Ansprüche, **gekennzeichnet durch** eine Steuerung, die mit den Messsensoren (12) der Messbereiche (10) in Daten übertragender Weise verbunden ist, sodass mittels der Steuerung Messdaten, die mittels der Messsensoren (12) erfasst werden, verarbeitbar sind.

13. Schneidwerk (1) nach Anspruch 12, **dadurch gekennzeichnet, dass** die Steuerung dazu eingerichtet ist, in Abhängigkeit der verarbeiteten Messdaten Steuerbefehle zu erzeugen, die darauf hinwirken, eine Ist-Stellung der Tragarme (6) an dem Rahmen (2) in Richtung einer Soll-Stellung zu verändern.

14. Schneidwerk (1) nach einem der vorhergehenden Ansprüche, **gekennzeichnet durch** Fördervorrichtungen, die jeweils als mindestens ein endloses Band ausgeführt und derart drehantreibbar sind, dass mittels der Fördervorrichtungen das abgeschnittene Erntegut in Breitenrichtung des Schneidwerks (1) dem Übergabesegment (8) des Mittenabschnitts (3) zuführbar ist.

15. Schneidwerk (1) nach einem der vorhergehenden Ansprüche, **dadurch gekennzeichnet, dass** dem Übergabesegment (8) eine Fördervorrichtung zugeordnet ist, wobei die Fördervorrichtung, die vorzugsweise in Form eines endlosen und drehantreibbaren Bandes ausgeführt ist, dazu eingerichtet ist, das abgeschnittene Erntegut in Tiefenrichtung des Schneidwerks (1) zu fördern.

16. Schneidwerk (1) nach einem der Ansprüche 14 oder 15, **dadurch gekennzeichnet, dass** das Höhenführungssystem zur Höhenführung zumindest eines Teils der Fördervorrichtungen, vorzugsweise sämtlicher Fördervorrichtungen, eingerichtet ist.

17. Mähdrescher, umfassend ein Schneidwerk (1), wobei das Schneidwerks (1) an einem Einzugskanal des Mähdreschers befestigt ist, sodass das Schneidwerk (1) von dem Einzugskanal getragen wird,
**dadurch gekennzeichnet, dass**
das Schneidwerk (1) gemäß einem der vorhergehenden Ansprüche ausgebildet ist.

## Claims

1. Header (1), comprising
- a frame (2) which has a centre section (3) and two side sections (4) each connected to the centre section (3) on opposite sides,
- a flexible cutter bar (5) extending across a width of the header unit (1),
- a plurality of support arms (6) distributed over a width of the header unit (1), which are pivotably attached to the frame (2) and support at least the cutter bar (5) in a height-adjustable manner,
- a height guide system (7) for guiding at least the height of the cutter bar (5),
wherein the centre section (3) has a central transfer segment (8) for transferring cut crop material to downstream harvesting members and side segments (9) adjoining the transfer segment (8) on opposite sides,
wherein the height guidance system (7) comprises a plurality of measuring areas (10), each with a measuring shaft (11) and at least one measuring sensor (12) assigned to the respective measuring shaft (11),
wherein at least some of the measuring areas (10) each detect a plurality of support arms (6),
**characterised in that**
the side sections (4) each have at least two measuring areas (10) and the side segments (9) of the centre section (3) each have at least one measuring range (10).

2. Header (1) according to claim 1, **characterised in that** the side sections (4) each have exactly two measuring areas (10) and the side segments (9) of the centre section each have exactly one measuring area (10).

3. Header (1) according to one of the preceding claims, **characterised by** a further measuring range (10) which detects the transfer segment (8), wherein the transfer segment (8) is height-adjustable and preferably rigid.

4. Header (1) according to one of the preceding claims, **characterised in that** all measuring areas (10) each detect a plurality of support arms (6).

5. Header (1) according to one of the preceding claims, **characterised in that** the measuring shaft (11) of the measuring areas (10) assigned to the side sections (4) each detect at least three support arms (6).

6. Header (1) according to one of the preceding claims, **characterised in that** all support arms (6) are covered by the measuring areas (10).

7. Header (1) according to one of the preceding claims, **characterised in that** the measuring shafts (11) are elongated and mounted on the frame (2) so as to be rotatable about their longitudinal axis, the measuring shafts (11) preferably extending parallel to the width direction of the header (1).

8. Header (1) according to claim 7, **characterised in that** each support arm (6) detected in a measuring area (10) is connected by means of a lever arrangement to the measuring shaft (11) associated with the measuring area (10), the lever arrangement being set up to translate a height movement of the associated support arm (6) into a rotary movement of the measuring shaft (11).

9. Header (1) according to one of the preceding claims, **characterised in that** the side sections (4) are each designed to be pivotable relative to the centre section (3), preferably in each case about a pivot axis oriented horizontally and perpendicularly to a width direction of the header (1).

10. Header (1) according to one of the preceding claims, **characterised in that** the transfer segment (8) of the centre section (3) is rigid in itself.

11. Header (1) according to one of the preceding claims, **characterised in that** the side segments (9) of the center section (3) are designed to be flexible, the side segments (9) preferably each comprising at least two support arms (6).

12. Header (1) according to one of the preceding claims, **characterised by** a controller which is connected to the measuring sensors (12) of the measuring areas (10) in a data-transmitting manner, so that measurement data which are recorded by means of the measuring sensors (12) can be processed by means of the controller.

13. Header (1) according to claim 12, **characterised in that** the control system is set up to generate control commands as a function of the processed measurement data, which control commands act to change an actual position of the support arms (6) on the frame (2) in the direction of a desired position.

14. Header (1) according to one of the preceding claims, **characterised by** conveying devices which are each designed as at least one endless belt and can be driven in rotation in such a way that the cut crop can be fed to the transfer segment (8) of the center section (3) in the width direction of the header (1) by means of the conveying devices.

15. Header (1) according to one of the preceding claims, **characterised in that** a conveying device is associated with the transfer segment (8), wherein the conveying device, which is preferably designed in the form of an endless and rotationally drivable belt, is set up to convey the cut crop in the depth direction of the header (1).

16. Header (1) according to one of claims 14 or 15, **characterised in that** the height guidance system is set up for height guidance of at least some of the conveying devices, preferably all of the conveying devices.

17. A combine harvester comprising a header (1), wherein the header (1) is attached to a feed channel of the combine harvester so that the header (1) is carried by the feed channel,
**characterised in that**
the header (1) is designed according to one of the preceding claims.

## Revendications

1. Barre de coupe (1), comprenant
- un cadre (2) qui présente une partie médiane (3) ainsi que deux parties latérales (4) raccordées chacune à la partie médiane (3) sur des côtés opposés,
- une barre porte-lames (5) souple qui s'étend sur une largeur de la barre de coupe (1),
- une pluralité de bras supports (6) qui sont répartis sur une largeur de la barre de coupe (1), sont fixés de manière pivotante au cadre (2) et portent au moins la barre porte-lames (5) avec possibilité de réglage en hauteur,
- un système de guidage en hauteur (7) destiné à guider en hauteur au moins la barre porte-lames (5),
où la partie médiane (3) présente un segment de transfert médian (8), destiné à transférer la récolte coupée à des organes de récolte disposés en aval, ainsi que des segments latéraux (9) se raccordant chacun au segment de transfert (8) sur des côtés opposés,
où le système de guidage en hauteur (7) comporte une pluralité de zones de mesure (10), dotées chacune d'un axe de mesure (11) et d'au moins un capteur de mesure (12) associé à l'axe de mesure (11) respectif,
où au moins une partie des zones de mesure (10) détecte chacune une pluralité de bras supports (6),
**caractérisée en ce que**
les parties latérales (4) présentent chacune au moins deux zones de mesure (10) et les segments latéraux (9) de la partie médiane (3) présentent chacun au moins une zone de mesure (10.

2. Barre de coupe (1) selon la revendication 1, **caractérisée en ce que** les parties latérales (4) présentent chacune exactement deux zones de mesure (10) et les segments latéraux (9) de la partie médiane présentent chacun exactement une zone de mesure (10).

3. Barre de coupe (1) selon une des revendications précédentes, **caractérisée en ce qu'**elle comprend une zone de mesure (10) supplémentaire qui détecte le segment de transfert (8), le segment de transfert (8) étant réglable en hauteur et, de préférence, rigide.

4. Barre de coupe (1) selon une des revendications précédentes, **caractérisée en ce que** toutes les zones de mesure (10) détectent chacune une pluralité de bras supports (6).

5. Barre de coupe (1) selon une des revendications précédentes, **caractérisée en ce que** l'axe de mesure (11) des zones de mesure (10) associées aux parties latérales (4) détectent respectivement au moins trois bras supports (6).

6. Barre de coupe (1) selon une des revendications précédentes, **caractérisée en ce qu'**au total tous les bras supports (6) sont détectés par les zones de mesure (10).

7. Barre de coupe (1) selon une des revendications précédentes, **caractérisée en ce que** les axes de mesure (11) sont réalisés sous une forme allongée et sont montés sur le cadre (2) avec possibilité de rotation autour de leur axe longitudinal, les axes de mesure (11) s'étendant de préférence parallèlement au sens de la largeur de la barre de coupe (1).

8. Barre de coupe (1) selon la revendication 7, **caractérisée en ce que** chaque bras support (6) détecté dans une zone de mesure (10) est relié au moyen d'un agencement de levier à l'axe de mesure (11) associé à la zone de mesure (10), l'agencement de levier étant conçu pour transformer un déplacement en hauteur du bras support (6) associé en un mouvement de rotation de l'axe de mesure (11).

9. Barre de coupe (1) selon une des revendications précédentes, **caractérisée en ce que** les parties latérales (4) sont réalisées chacune avec possibilité de pivotement par rapport à la partie médiane (3), de préférence respectivement autour d'un axe de pivotement orienté horizontalement et perpendiculairement à un sens de largeur de la barre de coupe (1).

10. Barre de coupe (1) selon une des revendications précédentes, **caractérisée en ce que** le segment de transfert (8) de la partie médiane (3) est réalisé de manière rigide en soi.

11. Barre de coupe (1) selon une des revendications précédentes, **caractérisée en ce que** les segments latéraux (9) de la partie médiane (3) sont réalisés sous une forme souple, les segments latéraux (9) comportant de préférence chacun au moins deux bras supports (6).

12. Barre de coupe (1) selon une des revendications précédentes, **caractérisée en ce qu'**elle comprend une commande qui est reliée aux capteurs de mesure (12) des zones de mesure (10), de manière à transmettre des données, de sorte que la commande permet de traiter des données de mesure recueillies à l'aide des capteurs de mesure (12).

13. Barre de coupe (1) selon la revendication 12, **caractérisée en ce que** la commande est conçue pour générer des instructions de commande en fonction des données de mesure traitées, qui font en sorte de modifier une position réelle des bras supports (6) sur le cadre (2) pour aller vers une position de consigne.

14. Barre de coupe (1) selon une des revendications précédentes, **caractérisée en ce qu'**elle comprend des dispositifs convoyeurs qui sont réalisés chacun sous la forme d'au moins une bande sans fin et peuvent être entraînés en rotation de manière à ce que les dispositifs convoyeurs permettent d'amener, dans le sens de la largeur de la barre de coupe (1), la récolte coupée au segment de transfert (8) de la partie médiane (3).

15. Barre de coupe (1) selon une des revendications précédentes, **caractérisée en ce qu'**un dispositif convoyeur est associé au segment de transfert (8), sachant que le dispositif convoyeur, qui est de préférence réalisé sous la forme d'une bande sans fin pouvant être entraînée en rotation, est conçu pour transporter la récolte coupée dans le sens de la profondeur de la barre de coupe (1).

16. Barre de coupe (1) selon une des revendications 14 ou 15, **caractérisée en ce que** le système de guidage en hauteur est conçu pour le guidage en hauteur d'au moins une partie des dispositifs convoyeurs, de préférence de tous les dispositifs convoyeurs.

17. Moissonneuse-batteuse comprenant une barre de coupe (1), la barre de coupe (1) étant fixée à un conduit d'alimentation de la moissonneuse-batteuse, de sorte que la barre de coupe (1) est portée par le conduit d'alimentation,
**caractérisée en ce que**
la barre de coupe (1) est réalisée selon une des revendications précédentes.
